(19) Europäisches Patentamt
European Patent Office
Office européen des brevets

(11) EP 3 028 064 B1

(12) **FASCICULE DE BREVET EUROPEEN**

(45) Date de publication et mention de la délivrance du brevet:
**16.09.2020 Bulletin 2020/38**

(21) Numéro de dépôt: **14744083.8**

(22) Date de dépôt: **24.07.2014**

(51) Int Cl.:
*G01S 7/524* (2006.01)          *G01S 15/89* (2006.01)
*G10K 11/34* (2006.01)

(86) Numéro de dépôt international:
**PCT/EP2014/065972**

(87) Numéro de publication internationale:
**WO 2015/014723 (05.02.2015 Gazette 2015/05)**

(54) **SYSTEME SONAR A ANTENNE COURBE OU CONFIGUREE POUR EMETTRE LE MEME DIAGRAMME D'EMISSION QUE L'ANTENNE COURBE**

SONARSYSTEM MIT EINER GEKRÜMMTEN ANTENNE ODER EINER FÜR DIE ÜBERTRAGUNG DESSELBEN ÜBERTRAGUNGSMUSTERS WIE DIE GEKRÜMMTE ANTENNE KONFIGURIERTEN ANTENNE

SONAR SYSTEM WITH CURVED ANTENNA OR ANTENNA CONFIGURED TO TRANSMIT THE SAME TRANSMISSION PATTERN AS THE CURVED ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2013 FR 1301864**

(43) Date de publication de la demande:
**08.06.2016 Bulletin 2016/23**

(73) Titulaire: **THALES**
**92400 Courbevoie (FR)**

(72) Inventeurs:
• **GUTHMANN, Pierre**
**F-29200 Brest (FR)**
• **MANDELERT, Nicolas**
**F-29200 Brest (FR)**
• **FERRARA, Patrick**
**F-06560 Valbonne (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
**US-A- 4 802 148          US-A- 5 546 356**
**US-A1- 2004 208 084**

• **BELLETTINI A ET AL: "Design and Experimental Results of a 300-kHz Synthetic Aperture Sonar Optimized for Shallow-Water Operations", IEEE JOURNAL OF OCEANIC ENGINEERING, IEEE SERVICE CENTER, PISCATAWAY, NJ, US, vol. 34, no. 3, 1 juillet 2009 (2009-07-01), pages 285-293, XP011266896, ISSN: 0364-9059, DOI: 10.1109/JOE.2007.907933**

EP 3 028 064 B1

## EP 3 028 064 B1

**Description**

Le domaine de l'invention est celui des sonars. L'invention se rapporte plus particulièrement aux sonars utilisés pour l'imagerie du fond marin. Le domaine d'application de ces sonars concerne la détection d'objets par réflexion d'ondes sonores sur les objets et sur le fond marin et par traitement des ondes réfléchies.

Les objets sont, par exemple, des mines posées sur le fond marin. Pour cette application, les sonars comprennent une antenne d'émission émettant un faisceau acoustique dirigé vers le fond marin couvrant un secteur angulaire utile partant de l'antenne et délimité par deux directions inclinées par rapport à l'horizontal et à la verticale. Le secteur angulaire utile délimite la zone du fond marin que le sonar est destiné à imager. Autrement dit, le sonar est destiné à imager la zone du fond marin interceptée par le secteur angulaire.

Ces sonars sont habituellement montés sur un porteur submersible tel qu'un engin sous-marin remorqué ou autonome ou sous la coque d'un bâtiment de surface.

Les antennes émettrices actuelles sont des antennes cylindriques ou des antennes planes. Ces antennes présentent un diagramme d'émission comprenant un lobe principal et des lobes secondaires, le diagramme d'émission étant symétrique par rapport au maximum du lobe principal. Par exemple, les antennes planes présentent un diagramme d'émission en sinx/x. Les antennes sont habituellement configurées de façon que le maximum d'énergie soit émis entre la première et la deuxième direction, c'est-à-dire au sein du secteur angulaire utile.

Ces antennes consomment une énergie importante. Or, la chasse aux mines s'oriente vers des engins autonomes pour la recherche des mines. Un point important de la performance d'un sonar embarqué à bord d'un engin autonome est sa faible consommation en énergie.

On constate par ailleurs que ces antennes présentent des performances limitées en créant des trajets multiples vers la surface, notamment par petits fonds (typiquement inférieur à 30m). Le document XP011266896 intitulé "Design and Experimental Results of a 300-kHz Synthetic Aperture Sonar Optimized for Shallow-Water Opérations" divulgue par exemple un sonar ayant un diagramme d'émission qui atténue les trajets multiples dans les eaux peu profondes.

Le but de l'invention est de pallier au moins un de ces inconvénients.

A cet effet, l'invention a pour objet un système sonar destiné à imager le fond marin, comprenant au moins une antenne d'émission destinée à émettre un faisceau acoustique couvrant un secteur angulaire utile délimité par une première direction et une deuxième direction, la distance entre l'antenne et le fond marin étant plus importante selon la première direction que selon la deuxième direction. Selon l'invention, l'antenne est configurée de façon à former un diagramme d'émission dont le maximum se situe sensiblement selon la première direction et décroissant à partir de la première direction jusqu'à la deuxième direction et à partir de la première direction dans le sens opposé à la deuxième direction, l'atténuation en énergie étant plus rapide dans le sens opposé à la deuxième direction que vers la deuxième direction.

Un tel système sonar présente une plus grande autonomie que ceux de l'art antérieur puisqu'il permet de diminuer l'énergie sonore envoyée par l'antenne d'émission pour imager le fond marin. L'énergie sonore envoyée par une antenne étant directement liée à la puissance électrique nécessaire pour alimenter l'antenne, l'invention permet de réaliser des systèmes sonars consommant peu d'énergie. Si l'antenne émettrice est portée par un engin sous-marin autonome, l'autonomie de ce dernier est plus grande.

Par ailleurs la taille de l'antenne étant directement liée à l'énergie sonore qu'elle doit émette, le sonar selon l'invention nécessite une antenne d'émission de taille plus réduite que les antennes de l'art antérieur. Autrement dit, le système sonar selon l'invention permet de réduire la taille de l'antenne sans dégrader ses performances. L'intégration du système sonar sur des porteurs est ainsi facilitée.

Ces avantages sont liés au fait que le milieu (l'eau par exemple) dans lequel se propage l'onde sonore atténue cette onde. Or, l'onde sonore va parcourir un trajet plus long pour aller percuter le fond marin selon la première direction que selon la deuxième direction. Par conséquent, l'énergie acoustique nécessaire pour imager le fond marin selon la première direction est plus importante que l'énergie nécessaire pour imager le fond marin selon la deuxième direction.

Dans les systèmes de l'art antérieur, l'antenne d'émission émettait une énergie maximale entre les première et deuxième directions. De façon à envoyer une énergie sonore suffisante dans la première direction, on envoyait donc un surplus d'énergie dans les autres directions. La configuration de l'antenne d'émission selon l'invention permet, en envoyant une énergie maximale selon la première direction de limiter le surplus d'énergie envoyé dans les autres directions du secteur utile. Le maximum d'énergie est envoyé là où le besoin est maximum c'est-à-dire selon la direction de portée maximale.

Par ailleurs, l'énergie sonore envoyée en dehors du secteur angulaire utile, notamment au-delà de la première direction ne servant pas à imager le fond marin, il s'agit d'énergie sonore perdue. Le fait de configurer une antenne de façon qu'elle génère un diagramme d'émission diminuant plus vite depuis la première direction et dans le sens opposé à la deuxième direction, qu'entre la première et la deuxième direction permet de limiter l'énergie sonore émise et évite de consommer de l'énergie inutilement.

Enfin, l'énergie sonore émise au-delà d'une direction horizontale se réverbère à la surface de l'eau ce qui bruite les images obtenues par le système sonar. Le diagramme d'émission selon l'invention permet de limiter le bruit sur les images sonar et ainsi de fournir des images sonar de bonne qualité en particulier par petits fonds.

Avantageusement, le diagramme d'émission est tel que pour chaque direction comprise entre une troisième direction, comprise entre la première direction et la deuxième direction, et la deuxième direction, l'atténuation en énergie, par rapport à l'énergie émise selon la première direction, est sensiblement égale à l'atténuation de l'énergie sonore nécessaire pour imager un fond marin idéal plan selon cette direction par rapport à l'énergie sonore nécessaire pour imager le fond marin idéal selon la première direction.

Avantageusement, la troisième direction est une direction pour laquelle l'atténuation est de 3dB, l'angle formé entre la troisième direction et la première direction étant inférieur à 3 degrés.

Avantageusement, l'antenne d'émission comprend une surface émettrice comprenant un rayon de courbure variable, de façon à former ledit diagramme d'émission.

Avantageusement, la surface émettrice est courbe.

Avantageusement, le rayon de courbure de la surface émettrice augmente avec la distance séparant le point de la surface émettrice considéré du fond marin idéal selon une direction perpendiculaire au fond marin idéal.

Avantageusement, la courbe formée par la surface émettrice dans un plan de coupe de l'antenne perpendiculaire à son axe longitudinal est formée par un unique transducteur.

Avantageusement, l'antenne comprend une surface émettrice formant une courbe dans un plan de coupe de l'antenne perpendiculaire à son axe longitudinal, ladite courbe étant formée par une pluralité de transducteurs, ladite antenne comprenant un dispositif d'alimentation alimentant les transducteurs respectifs avec un même signal affecté de déphasages et/ou de modulation en amplitude respectifs de manière à former ledit diagramme d'émission.

Avantageusement, la surface émettrice est plane ou cylindrique.

Avantageusement, ladite antenne d'émission est dépointable en gisement.

Avantageusement, le système comprend un porteur, l'antenne d'émission étant installée sur le porteur.

Avantageusement, l'antenne d'émission est agencée de façon que sa surface émettrice s'étende longitudinalement selon un axe parallèle à la direction de déplacement du porteur.

Avantageusement, le système comprend deux antennes d'émission fixées à bâbord et à tribord du porteur.

Avantageusement, la première direction est la direction de portée maximale du système sonar et la deuxième direction est la direction de portée minimale du système sonar.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement en coupe dans un plan y, z, un système sonar selon l'invention,
- la figure 2 représente schématiquement une vue de côté du système de la figure 1,
- la figure 3 représente schématiquement un exemple de diagramme d'émission selon l'invention,
- la figure 4 représente schématiquement une antenne d'émission selon un premier mode de réalisation de l'invention,
- la figure 5 représente schématiquement un profil l'antenne de la figure 4,
- la figure 6 représente schématiquement une antenne d'émission d'ondes acoustiques selon un deuxième mode de réalisation de l'invention,
- la figure 7 représente une variante de l'antenne des figures 4 et 5,
- la figure 8 représente schématiquement une variante de l'antenne selon le deuxième mode de réalisation.

D'une figure à l'autre, les mêmes éléments sont repérés par les mêmes références.

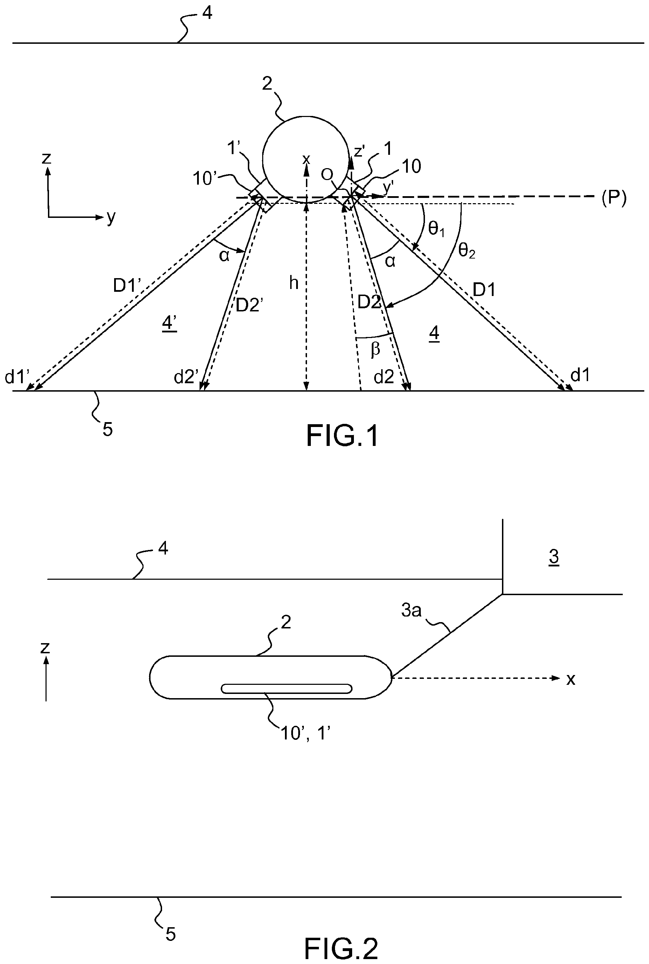

Sur les figures 1 et 2, on a représenté un système sonar destiné à imager le fond marin 5. Ce dispositif comprend deux sonars latéraux 1, 1' montés sur un porteur submersible 2 naviguant sous la surface 4 de l'eau. Le porteur 2 est un engin sous-marin remorqué par un bâtiment de surface 3 au moyen d'un câble 3a. En variante, le porteur peut être un engin sous-marin autonome, ou le fond immergé d'un bâtiment de surface. Le système sonar peut également comprendre au moins une antenne d'émission remorquée par le porteur. Le porteur 2 est configuré de façon à naviguer selon une direction x d'avancement. Il est de préférence destiné à naviguer à une altitude constante par rapport au fond marin 5.

Le système sonar comprend deux sonars 1, 1' comprenant chacun une antenne d'émission 10, 10'. L'engin sous-marin est avantageusement configuré de façon que lorsqu'il navigue à une hauteur fixe par rapport au fond marin, les antennes d'émission 10, 10' se situent à une hauteur fixe h par rapport au fond marin.

Les sonars sont disposés à bâbord et à tribord du porteur. Chaque antenne d'émission est configurée et positionnée de façon à émettre un faisceau acoustique, en direction du fond marin 5. Plus précisément, chaque antenne d'émission 10, 10' est configurée et positionnée de façon à couvrir un secteur angulaire 4, 4' utile présentant une ouverture angulaire $\alpha$ délimitée par une première direction d1, d1' et une deuxième direction d2, d2' partant de l'antenne d'émission correspondante et orientées vers le fond marin. Autrement dit, chaque antenne est configurée de façon à émettre un faisceau acoustique qui va couvrir le secteur angulaire utile qui lui est attribué, c'est-à-dire s'étendre au moins sur la totalité de l'ouverture angulaire α délimitée par des droites d1 et d2 ou d1' et d2'. L'antenne est positionnée sur le porteur et éventuellement configurée de façon que le faisceau dans la zone utile soit dirigée vers le fond marin 5.

Avantageusement, les directions d1, d2 et d1', d2' sont inclinées par rapport à une direction reliant l'antenne et un fond marin idéal, cette direction étant perpendiculaire au fond marin idéal. Les directions d1, d2 et d1', d2' sont situées dans un quart de plan délimité par cette direction et le fond marin idéal.

Le secteur angulaire utile 4, 4' délimite la zone de fond marin qui est imagée par le sonar 1, 1'. La première distance D1, D1' séparant l'antenne 10, 10' du fond marin selon la direction d1, d1' est plus importante que la deuxième distance D2, D2' séparant l'antenne selon la deuxième direction d2, d2'.

La première distance D1, D1' est la portée maximale du sonar 1, 1' correspondant. Il s'agit avantageusement de la portée maximale du sonar, ou portée de détection du sonar, pour la mission considérée correspondant à la distance maximale devant séparer l'antenne du fond marin pour que le sonar puisse l'imager. Autrement dit, la première direction d1, d1' est la direction de portée maximale du sonar. C'est la direction selon laquelle la distance entre le fond marin et le sonar est maximale dans le secteur utile imagé par le sonar. La deuxième direction d2 d2' est la direction de portée minimale du sonar. Il s'agit de la direction selon laquelle la distance séparant le sonar du fond marin est minimale dans le secteur utile. La distance D2, D2' est la portée minimale du sonar. En résumé, les directions d1 et d2 et respectivement d1', d2' délimitent des secteurs utiles respectifs du sonar, c'est-à-dire les secteurs réellement imagés par le sonar.

L'ouverture angulaire α du secteur utile est typiquement comprise entre 10° et 90°. Classiquement, les sonars latéraux rayonnent des faisceaux extrêmement fins en gisement. Autrement dit, l'ouverture en gisement est plus faible que l'ouverture en site.

Sur la réalisation des figures 1 et 2, les directions d1 et d2 (et d1', d2') sont situées dans le plan (y,z) perpendiculaire à la direction x d'avancement du porteur 2. La direction y est une direction horizontale perpendiculaire à la direction d'avancement x. La direction z est une direction verticale. La direction verticale est la direction perpendiculaire au plan horizontal formé par le fond marin 5.

Le premier angle θ1 et le deuxième angle θ2 sont les angles formés entre un plan horizontal P passant par l'antenne 10 et les directions respectives d1 et d2. Ils sont appelés angle de site. Ces angles sont définis, pour une altitude h donnée du porteur 2 par rapport au fond marin, de façon que le secteur utile couvre une fauchée F prédéfinie. La fauchée F est la distance horizontale séparant les directions d1 et d2 sur le fond marin 5. Cette distance est, dans la réalisation de la figure, calculée perpendiculairement à la direction d'avancement x du porteur 2. Ces angles θ1 et θ2 sont non nuls et négatifs. La valeur absolue de θ1 est inférieure à celle de θ2.

Dans la suite du texte et pour plus de clarté, on ne s'intéresse plus qu'à la première antenne 10 et non à la deuxième antenne 10'. Le diagramme d'émission de cette dernière étant le même que celui de la première antenne 10 mais défini par rapport aux directions d1' et d2'.

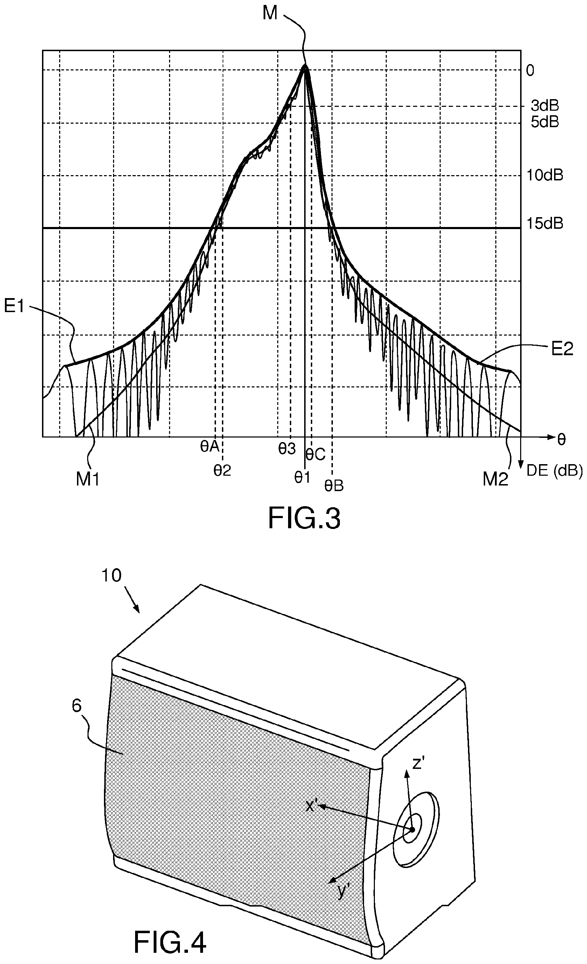

Sur la figure 3, on a représenté un exemple de diagramme d'émission de l'antenne 10. L'angle selon lequel varie le diagramme de d'émission est ici l'angle de site θ.

L'axe des abscisses représente l'axe des angles de site θ entre le plan horizontal P parallèle au fond marin idéal passant par l'antenne et les directions partant de l'antenne 10. Le point O duquel partent les directions d1 et d2 est un point situé derrière la surface émettrice ou émissive de l'antenne 10. Le plan horizontal P passe par ce point. L'angle de site θ d'une direction est compté négativement lorsqu'elle se dirige vers un point situé en dessous du plan horizontal P. L'axe des ordonnées correspond à l'atténuation DE en décibels (dB) par rapport au maximum du diagramme de directivité.

Selon une caractéristique essentielle de l'invention, l'antenne d'émission 10 est configurée et agencée de façon à former un diagramme d'émission dont le maximum M se situe sensiblement selon la première direction d1, c'est-à-dire au niveau du premier angle de site θ1, et décroissant à partir de la première direction d1 jusqu'à la deuxième direction d2 et depuis la première direction dans la direction opposée à la deuxième direction d2. Ce diagramme comprend un unique maximum avec une atténuation à 0dB. Autrement dit, l'antenne n'émet l'énergie maximale que selon une direction. Il s'agit d'un maximum absolu.

Cette direction est sensiblement la direction d1. Par sensiblement en entend que la direction selon laquelle l'antenne émet le plus d'énergie a un angle de site égal à compris dans l'intervalle [θ1 - 0,5° ; θ1+ 0, 5°].

Le diagramme d'émission oscille, depuis la direction d1 jusqu'à la direction d2 et depuis la direction d1 jusqu'à l'horizontale, autour de courbes moyennes M1, M2 décroissant de façon sensiblement monotone dans ces deux sens. En d'autres termes, les enveloppes E1, E2 reliant les maximas locaux du diagramme d'émission de part et d'autre du maximum absolu M sont des courbes décroissant de façon sensiblement monotone.

L'atténuation en énergie est plus rapide, depuis la première direction d1, dans le sens opposé à la deuxième direction d2 que vers la deuxième direction d2. Autrement dit, la pente moyenne de la courbe moyenne ou de l'enveloppe définies ci-dessus est moins importante du côté de la deuxième direction d2 que de l'autre côté de la première direction d1.

Nous avons vu précédemment que cette caractéristique permet de réaliser des économies en énergie et de limiter la dégradation des images sonar. Elle maximise en effet l'énergie sonore émise dans le secteur angulaire utile et minimise l'énergie sonore émise en dehors de ce secteur, notamment vers les angles de site supérieurs.

Avantageusement, le diagramme d'émission de l'antenne est tel que pour chaque direction comprise entre la deuxième d2 et une direction d3 comprise entre d1 et d2 et pour laquelle l'atténuation est sensiblement égale à 3dB, l'atténuation en énergie, par rapport au maximum d'énergie M envoyé selon la direction d'émission maximale d1, est sensiblement égale à l'atténuation de l'énergie sonore nécessaire pour imager un fond marin idéal plan selon cette direction par rapport à l'énergie sonore nécessaire pour imager le fond marin idéal selon la première direction d1. Par le fait que l'atténuation est sensiblement égale à 3dB selon d3 on entend que d3 est la direction la plus proche de d1 (entre d1 et d2) pour laquelle l'atténuation est égale à 3dB ou bien cela peut être la direction (entre d1 et d2) pour laquelle la première courbe moyenne M1 est égale à 3dB.

Cela signifie que dans la réalisation avantageuse dans laquelle l'antenne d'émission émet, dans la première direction d1, une énergie sonore sensiblement égale à l'énergie nécessaire et suffisante pour imager le fond marin selon cette direction, l'énergie sonore émise dans chaque direction comprise entre les directions d3 et d2 est sensiblement égale à l'énergie nécessaire et suffisante pour imager le fond marin à selon cette direction.

L'énergie nécessaire pour imager le fond marin en fonction de la distance d'observation d, c'est-à-dire la distance séparant l'antenne émettrice et le fond marin, par rapport à l'énergie nécessaire à une distance initiale $d_0$ varie en première approximation selon la loi logarithmique suivante :

$$E(d) = E(d_0) + 40 \log d \qquad\qquad 1$$

Le fond marin idéal étant sensiblement parallèle au plan horizontal P, le diagramme d'émission présente donc pour les angles site θ de chaque direction comprise entre les directions d3 et d2, c'est-à-dire entre les angles de site θ3 et θ2, une valeur sensiblement égale à :

$$DE(\theta) = -40 \log\left(\frac{\sin\theta_1}{\sin\theta}\right) \qquad\qquad 2$$

Cette configuration est optimale en termes d'énergie envoyée dans le secteur utile puisque l'énergie envoyée sur le fond marin idéal n'est ni plus ni moins que l'énergie nécessaire et suffisante pour imager le fond marin idéal selon chaque direction comprise entre la troisième direction et la deuxième direction. Autrement dit, en chaque point du fond marin idéal interceptant le faisceau émis par l'antenne, l'atténuation en énergie est exactement compensée par la forme du diagramme d'émission.

Le fait que le diagramme d'émission est tel que pour chaque direction entre d3 et d2, c'est-à-dire pour chaque angle de site situé entre θ3 et θ2, l'atténuation en énergie compense sensiblement l'atténuation de l'énergie sonore nécessaire pour imager un fond marin idéal plan selon cette direction par rapport à l'énergie sonore nécessaire pour imager la fond marin idéal selon la direction d1, on entend que :

- pour chaque direction comprise dans une première zone du diagramme d'émission comprise entre θ3 et θ2, dans laquelle l'atténuation définie par l'équation 2 est au moins égale à 3 dB (décibels), l'atténuation du diagramme d'émission est au moins égale à celle définie par l'équation 2 et est supérieure à l'atténuation définie par l'équation 2 d'au plus 15 dB.

Par ailleurs, l'angle formé entre θ3 et θ1 est inférieur à 3 degrés.

Avantageusement, au-delà d'un premier angle intermédiaire θA et d'un deuxième angle intermédiaire θB, par rapport à la direction d1, l'atténuation est au moins égale à 15 dB. La direction d'angle θA est situé au-delà de la direction d2 par rapport à la direction d1 et la direction d'angle θB est située de l'autre côté de la direction d2 par rapport à la direction d1. Les angles qui sont situés au-delà de θA et de θB par rapport à d1 sont les angles qui sont situés au-delà de θA lorsqu'en partant de d1 on se dirige dans le sens de d1 vers d2 et respectivement les angles qui sont situés au-delà de θB lorsqu'en partant de d1 on se dirige dans le sens de d2 vers d1. La valeur absolue de la différence entre θB et θ1 est inférieure à la valeur absolue de la différence entre θA et θ1 et de préférence inférieure à la valeur absolue entre θ2 et θ1.

On définit un troisième angle intermédiaire θC situé de l'autre côté de θ1 par rapport à θ2 et pour lequel l'atténuation est sensiblement égale à 3dB. La valeur absolue de la différence entre θC et θ1 est inférieure à la valeur absolue de la différence entre θ3 et θ1.

Dans un premier mode de réalisation représenté sur l'exemple de la figure 4, le diagramme d'émission souhaité est obtenu au moyen d'une antenne d'émission 10 comprenant une surface émettrice 6 dont le rayon de courbure est variable. La courbure de la surface émettrice de l'antenne est ajustée, par l'homme du métier, de façon à obtenir le diagramme d'émission souhaité. La surface émettrice peut présenter des angles vifs séparant des parties courbes. De préférence, comme visible sur la figure 4, la surface émettrice 6 est une surface courbe. Par surface courbe, on entend une surface galbée, c'est-à-dire une surface dont le rayon de courbure varie sans former d'angle. Par angle, on entend la figure formée par l'intersection de plusieurs plans. Autrement dit, la surface courbe ne comprend pas d'angle saillant ou rentrant, c'est-à-dire qu'elle est dépourvue de points anguleux. Ce type de surface est plus facile à réaliser.

On définit un repère orthogonal (x', y', z') lié à l'antenne. L'axe x' est l'axe longitudinal selon laquelle s'étend longitudinalement la surface émettrice. L'origine O du repère est positionnée derrière la surface émettrice selon la direction d'émission de la surface d'où partent les directions d1 et d2. L'antenne est configurée dans le repère O, x', y', z' solidaire de l'antenne, en considérant que le plan x',y' est un plan destiné à former un plan parallèle au fond marin et par rapport auquel sont définis les angles de site et de façon que le plan y', z' soit le plan dans lequel sont définies les directions d1 et d2. L'angle de site de d1 est supérieur à l'angle de site de d2. La courbure de l'antenne est définie pour une mission prédéterminée définissant les angles $\theta 1$ et $\theta 2$.

L'antenne est ensuite montée sur un porteur de façon que le plan x', y' soit parallèle au plan marin 5 et de façon que le plan x', z' soit le plan dans lequel on souhaite définir les directions d1 et d2. Dans la réalisation de la figure 1, l'antenne est positionnée de façon que l'axe x' soit parallèle à l'axe x et que les axes y' et z' soient parallèle à l'axe y et à l'axe z.

La surface émettrice 6 présente un profil comprenant une courbure variable. Autrement dit, la courbe formée par la surface émettrice dans le plan de coupe présente une courbure variable. Autrement dit, le rayon de courbure varie selon l'abscisse curviligne sur cette courbe.

L'antenne 10 est configurée et agencée de façon que le rayon de courbure du profil de la surface émettrice 6 augmente lorsque l'on parcourt la surface émissive dans le sens de d1 vers d2. Alors le rayon de courbure du profil de la surface émettrice 6 augmente avec l'angle de site du point considéré sur le profil, c'est-à-dire avec l'angle de site du point de la surface émettrice à l'abscisse curviligne du point de la surface émettrice considéré. L'altitude du point considéré dans un référentiel terrestre varie comme l'angle de site du point considéré. Autrement dit, de façon plus générale l'antenne est agencée et configurée de façon que le rayon de courbure de sa surface émettrice augmente avec la distance séparant le point de l'antenne considéré du fond marin idéal selon une direction perpendiculaire au fond marin idéal. Le rayon de courbure de l'antenne est alors plus important pour les émissions correspondant à un fond lointain que pour les directions correspondant à un fond proche.

Sur la réalisation de la figure 4, l'antenne présente un profil uniforme sur toute la longueur de l'antenne. En variante, le profil de l'antenne varie selon l'axe longitudinal de l'antenne.

Sur l'exemple représenté sur la figure 4, la surface émettrice 6 est constituée par un unique transducteur. Autrement dit, la courbe formée par le profil de la surface émettrice appartient à un unique transducteur.

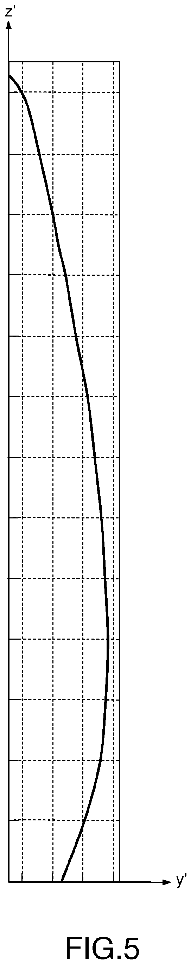

Sur la figure 5, on a représenté le profil de la surface émettrice dans le plan y', z'. On voit bien que la surface émettrice est courbe, que son rayon de courbure est variable dans ce plan et qu'il augmente selon l'axe z'.

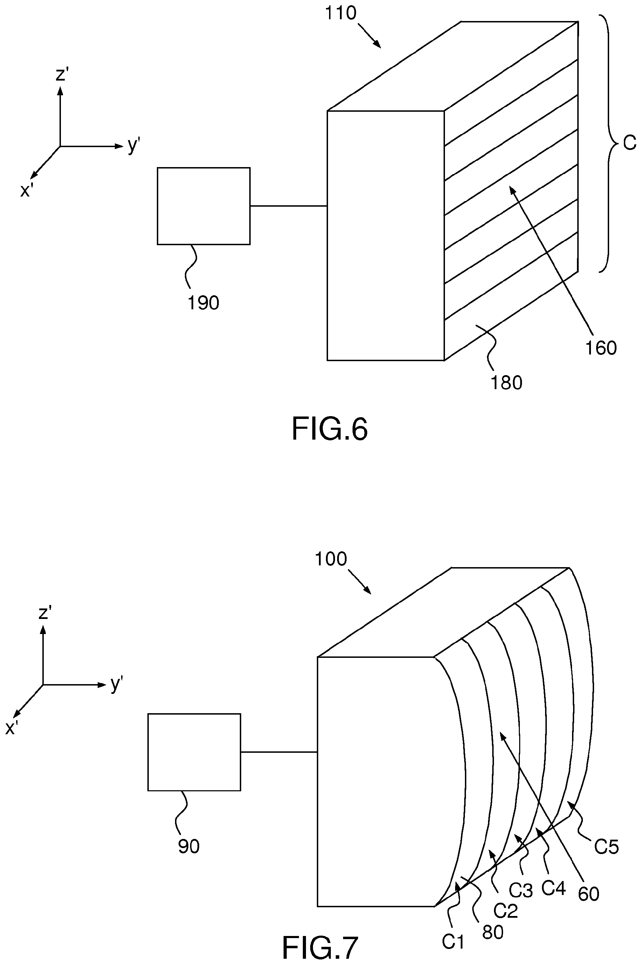

Dans un deuxième mode de réalisation représenté sur la figure 6, l'antenne émettrice 110 présente une surface émettrice 160 de forme prédéterminée. Cette antenne ne permettrait pas d'obtenir le diagramme de directivité souhaité si elle était formée d'un unique transducteur ou d'une pluralité de transducteurs alimentés au moyen du même signal. L'antenne 110 est ici plane, autrement dit sa surface émettrice 160 est plane. En variante, sa surface émettrice pourrait être cylindrique ou présenter une autre forme.

La courbe formée par la surface émettrice 160 dans une section de l'antenne dans un plan perpendiculaire à l'axe longitudinal de l'antenne est formée par une pluralité de transducteurs 180. Autrement dit, le profil de l'antenne est une courbe formée par une pluralité de transducteurs 180. Cette courbe est une droite dans le cas d'une antenne plane et une portion de cercle ou un cercle dans le cas d'une antenne cylindrique. Ces transducteurs 180 forment une colonne C selon l'axe z'.

Selon l'invention, les transducteurs 180 de la colonne de transducteurs sont alimentés par un dispositif d'alimentation 190. Ce dispositif d'alimentation 190 est configuré de façon à alimenter les transducteurs 180 avec un même signal affecté de retards et/ou de modulations en amplitude respectifs choisis de manière que l'antenne 110 présente le diagramme d'émission souhaité tel que défini précédemment. Autrement dit, les retards et/ou modulations en amplitude sont choisis de façon que l'antenne 110 présente un diagramme de d'émission identique à une antenne courbe telle que décrite précédemment. Une antenne plane ou cylindrique est plus facile à fabriquer qu'une antenne à courbure variable selon la premier mode de réalisation.

Avantageusement, l'antenne est dépointable en gisement, c'est-à-dire, dans un plan perpendiculaire au plan formé par les directions d1 et d2. A cet effet, que ce soit pour le premier mode de réalisation ou le deuxième mode réalisation, l'antenne comprend une pluralité colonnes d'au moins un transducteur réparties selon une direction perpendiculaire au plan formé par les directions d1 et d2, c'est-à-dire selon la direction longitudinale de l'antenne, et le dispositif d'alimentation est configuré de façon à alimenter les colonnes transducteurs avec un signal affecté d'autres déphasages et/ou d'autres modulation en amplitude respectifs dépendant de la position de la colonne de transducteurs selon la direction perpendiculaire au plan formé par les directions d1 et d2.

Sur la figure 7, on a représenté un exemple de ce type d'antenne selon le premier mode de réalisation. L'antenne 100 comprend une pluralité de colonnes Ci d'un transducteur 80 réparties selon la direction x'. Ces transducteurs 80 forment chacun une colonne Ci avec i= 1 à 5 selon la direction z'. Par ailleurs, l'antenne comprend un dispositif d'alimentation 90 configuré de façon à alimenter ces transducteurs 80 au moyen d'un unique signal ou de signaux respectifs issus d'un même signal affecté de retards et/ou de modulations en amplitude respectifs choisis de façon à obtenir une direction de pointage donnée en gisement. Dans cette variante, la courbe formée par le profil de la surface émettrice appartient à un unique transducteur. Autrement dit, la courbe formée par la surface émettrice, dans un plan de coupe de l'antenne perpendiculaire à son axe longitudinal, est formée par un unique transducteur. Dans une variante du premier mode de réalisation, les colonnes C pourraient être constituées d'une pluralité de transducteurs alimentés par un même signal. Les antennes à courbure variable sont économiques dans le sens où elles ne nécessitent qu'une alimentation pour alimenter une colonne de transducteurs ou l'unique transducteur formant la colonne. La commande de ces transducteurs par un unique signal ou la commande d'un unique transducteur de façon à former le diagramme d'émission souhaité est peu complexe et performante.

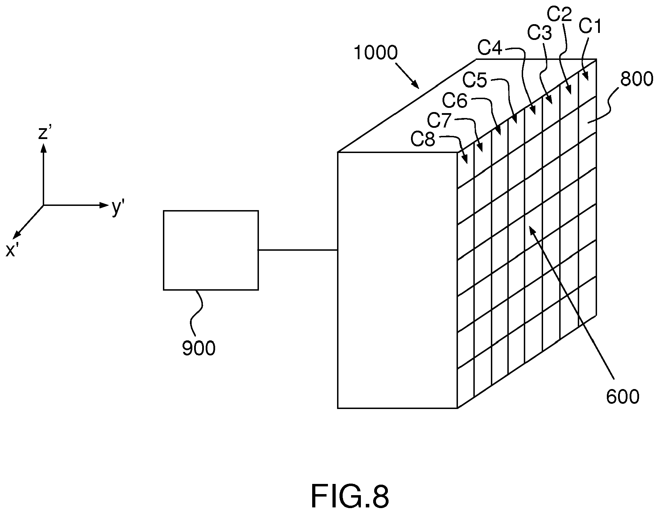

Un exemple d'antenne selon le deuxième mode de réalisation est représenté sur la figure 8. Dans cette réalisation, l'antenne 1000 présente une face émettrice plane 600 comprenant une pluralité de colonnes Ci avec i=1 à 8 de transducteurs 800 réparties selon la direction x'.

Le système sonar décrit précédemment comprend plusieurs antennes d'émission mais pourrait en comprendre une seule.

Dans le système sonar des figures 1 et 2, les antennes sont agencées de façon que les surfaces émettrices 6 s'étendent parallèlement à la direction de déplacement du porteur. Il s'agit de sonars latéraux. En variante, le système sonar comprend au moins une antenne d'émission comprenant une surface émettrice perpendiculaire à la direction d'avancement du porteur. Il s'agit alors d'un sonar frontal. Dans ce cas, le plan formé par les directions d1 et d2 est le plan (x,z) avec les modifications sur l'agencement de l'antenne d'émission que cela implique. L'antenne est alors avantageusement disposée de façon que son axe longitudinal x' soit parallèle à l'axe y, que l'axe z' soit parallèle à l'axe z et que l'axe y' soit parallèle à l'axe x.

L'invention se rapporte également à un système sonar comprenant le porteur et une antenne émettrice selon l'invention.

**Revendications**

1. Système sonar destiné à imager le fond marin, comprenant au moins une antenne d'émission (10) destinée à émettre un faisceau acoustique dirigé vers le fond marin couvrant un secteur angulaire utile (4) partant de l'antenne et délimité par une première direction (d1) et une deuxième direction (d2) inclinées par rapport à l'horizontale et la verticale, la première direction (d1) formant un angle avec l'horizontale (01) présentant une valeur absolue inférieure à une valeur absolue d'un deuxième angle (θ2) formé entre la seconde direction et l'horizontale, la valeur absolue du premier angle et la valeur absolue du deuxième angle étant inférieures à $\pi/2$, l'antenne d'émission (10) étant configurée de façon à former un diagramme d'émission présentant un maximum absolu d'énergie émise sensiblement selon la première direction (d1) et présentant une énergie émise décroissante de la première direction (d1) à la seconde direction (d2), **caractérisé en ce qu'**on définit une portion du secteur angulaire utile délimitée par la deuxième direction (d2) et une troisième direction (d3) comprise entre la première direction (d1) et la deuxième direction (d2), **en ce qu'**on définit un diagramme d'émission idéal présentant, selon toute direction de ladite portion, formant un angle θ avec l'horizontale, une atténuation idéale DE (θ) donnée par l'équation suivante :

$$DE(\theta) = -40 \log\left(\frac{\sin\theta_1}{\sin\theta}\right),$$

   et **en ce que** l'antenne d'émission est configurée de sorte que pour chaque direction (d), formant un angle θ avec l'horizontale, comprise dans ladite portion du secteur angulaire utile, le diagramme d'émission présente, selon ladite direction une atténuation en énergie par rapport à l'énergie émise selon la première direction (d1) au moins égale à l'atténuation idéale DE (θ) et supérieure à ladite atténuation idéale d'au plus 15 dB, l'atténuation idéale DE (θ) étant au moins égale 3dB, le diagramme d'émission présentant, selon ladite troisième direction (d3), une atténuation en énergie, par rapport à l'énergie émise selon la première direction (d1), sensiblement égale à 3dB.

2. Système sonar selon la revendication précédente, dans lequel la troisième direction est une direction pour laquelle l'atténuation est sensiblement égale à 3dB, l'angle formé entre la troisième direction et la première direction étant inférieur à 3 degrés.

**3.** Système sonar selon l'une quelconque des revendications précédentes, dans lequel l'antenne d'émission (10) comprend une surface émettrice (6) dont le profil, dans un plan perpendiculaire au plan formé par la première direction d1 et la deuxième direction d2, est une courbe dont le rayon de courbure varie selon l'abscisse curviligne sur cette courbe, de façon à former ledit diagramme d'émission.

**4.** Système sonar selon la revendication précédente, dans lequel la surface émettrice est une surface courbe (6).

**5.** Système sonar selon l'une quelconque des revendications 3 à 4, dans lequel le rayon de courbure de la surface émettrice augmente avec la distance séparant le point de la surface émettrice considéré du fond marin idéal selon une direction perpendiculaire au fond marin idéal.

**6.** Système sonar selon l'une quelconque des revendications 3 à 5, dans lequel la courbe formée par la surface émettrice (6) dans un plan de coupe de l'antenne perpendiculaire à son axe longitudinal est formée par un unique transducteur.

**7.** Système sonar selon l'une quelconque des revendications précédentes, dans lequel l'antenne présente un profil uniforme sur toute la longueur de l'antenne.

**8.** Système sonar selon l'une quelconque des revendications 1 à 2, dans lequel l'antenne (110) comprend une surface émettrice (160) formant une courbe dans un plan de coupe de l'antenne perpendiculaire à son axe longitudinal, ladite courbe étant formée par une pluralité de transducteurs (180) ladite antenne comprenant un dispositif d'alimentation (90) alimentant les transducteurs respectifs avec un même signal affecté de déphasages et/ou de modulation en amplitude respectifs de manière à former ledit diagramme d'émission.

**9.** Système sonar selon la revendication précédente, dans lequel la surface émettrice (160) est plane ou cylindrique.

**10.** Système sonar selon l'une quelconque des revendications précédentes, dans lequel ladite antenne d'émission est dépointable en gisement.

**11.** Système sonar selon l'une quelconque des revendications précédentes, comprenant un porteur (2), l'antenne d'émission (6) étant installée sur le porteur (2).

**12.** Système sonar selon l'une quelconque des revendications précédentes, dans lequel l'antenne d'émission (6) est agencée de façon que sa surface émettrice (6) s'étende longitudinalement selon un axe parallèle à la direction de déplacement du porteur (2).

**13.** Système sonar selon la revendication précédente comprenant deux antennes d'émission fixées à bâbord et à tribord du porteur.

**14.** Système sonar selon l'une quelconque des revendications précédentes, dans lequel la première direction (d1) est la direction de portée maximale du système sonar et la deuxième direction (d2) est la direction de portée minimale du système sonar.

**Patentansprüche**

**1.** Sonarsystem zur Abbildung des Meeresbodens, beinhaltend mindestens eine Sendeantenne (10), welche dazu bestimmt ist, einen auf den Meeresboden gerichteten akustischen Strahl auszusenden, welcher einen Nutzwinkelsektor (4) abdeckt, welcher bei der Antenne beginnt und durch eine erste Richtung (d1) und eine zweite Richtung (d2) abgegrenzt ist, welche in Bezug auf die Waagerechte und die Senkrechte geneigt sind, wobei die erste Richtung (d1) einen Winkel mit der Waagerechten (01) bildet, welcher einen Absolutwert unter einem Absolutwert eines zweiten Winkels (02) aufweist, welcher zwischen der zweiten Richtung und der Waagerechten gebildet ist, wobei der Absolutwert des ersten Winkels und der Absolutwert des zweiten Winkels $\pi/2$ unterschreiten, wobei die Sendeantenne (10) dazu konfiguriert ist, ein Emissionsdiagramm zu bilden, welches ein absolutes Maximum an im Wesentlichen in der ersten Richtung (d1) ausgesandter Energie aufweist und eine absteigende ausgesandte Energie von der ersten Richtung (d1) bis zur zweiten Richtung (d2) aufweist, **dadurch gekennzeichnet, dass** man einen Abschnitt des Nutzwinkelsektors definiert, welcher durch die zweite Richtung (d2) und eine dritte Richtung (d3) abgegrenzt ist, welche zwischen der ersten Richtung (d1) und der zweiten Richtung (d2) liegt, dadurch, dass man ein ideales Emissionsdiagramm definiert, welches in jeder Richtung des Abschnitts einen Winkel θ mit der Waagerechten bildet,
wobei eine ideale Abschwächung DE (θ) durch folgende Gleichung gegeben ist:

$$DE(\theta) = -40 \log\left(\frac{\sin\theta_1}{\sin\theta}\right),$$

und dadurch, dass die Sendeantenne so konfiguriert ist, dass für jede Richtung (d), welche einen Winkel θ mit der Waagerechten bildet, welche in dem Abschnitt des Nutzwinkelsektors enthalten ist, das Emissionsdiagramm entsprechend der Richtung eine Energieabschwächung in Bezug auf die in der ersten Richtung (d1) ausgesandte Energie von mindestens gleich der idealen Abschwächung DE (θ) und größer als die ideale Abschwächung um maximal 15 dB aufweist, wobei die ideale Abschwächung DE (θ) mindestens gleich 3 dB ist,
wobei das Emissionsdiagramm in der dritten Richtung (d3) eine Energieabschwächung in Bezug auf die in der ersten Richtung (d1) ausgesandte Energie von im Wesentlichen gleich 3dB aufweist.

2. Sonarsystem nach dem vorhergehenden Anspruch, wobei die dritte Richtung eine Richtung ist, bei welcher die Abschwächung im Wesentlichen gleich 3 dB ist, wobei der zwischen der dritten Richtung und der ersten Richtung gebildete Winkel unter 3 Grad beträgt.

3. Sonarsystem nach einem der vorhergehenden Ansprüche, wobei die Sendeantenne (10) eine Sendefläche (6) beinhaltet, deren Profil, in einer Ebene rechtwinklig zu der durch die erste Richtung d1 und die zweite Richtung d2 gebildeten Ebene, eine Kurve ist, deren Krümmungsradius gemäß der gekrümmten Abszisse auf dieser Kurve variiert, um das Emissionsdiagramm zu bilden.

4. Sonarsystem nach dem vorhergehenden Anspruch, wobei die Sendefläche eine gekrümmte Fläche (6) ist.

5. Sonarsystem nach einem der Ansprüche 3 bis 4, wobei der Krümmungsradius der Sendefläche mit zunehmendem Abstand zwischen dem betrachteten Punkt der Sendefläche zum idealen Meeresboden in einer zum idealen Meeresboden rechtwinkligen Richtung ansteigt.

6. Sonarsystem nach einem der Ansprüche 3 bis 5, wobei die durch die Sendefläche (6) in einer Schnittebene der Antenne rechtwinklig zu ihrer Längsachse gebildeten Kurve durch einen einzigen Umwandler gebildet wird.

7. Sonarsystem nach einem der vorhergehenden Ansprüche, bei welchem die Antenne ein einheitliches Profil über die gesamte Länge der Antenne aufweist.

8. Sonarsystem nach einem der Ansprüche 1 bis 2, bei welchem die Antenne (110) eine Sendefläche (160) beinhaltet, welche eine Kurve in einer Schnittebene der Antenne rechtwinklig zu ihrer Längsachse bildet, wobei die Kurve durch eine Vielzahl von Umwandlern (180) gebildet wird, wobei die Antenne eine Speisungsvorrichtung (90) beinhaltet, welche die jeweiligen Umwandler mit einem gleichen Signal speist, welches von jeweiligen Phasenverschiebungen und/oder Amplitudenmodulation betroffen ist, um das Emissionsdiagramm zu bilden.

9. Sonarsystem nach dem vorhergehenden Anspruch, wobei die Sendefläche (160) eben oder zylindrisch ist.

10. Sonarsystem nach einem der vorhergehenden Ansprüche, wobei die Sendeantenne in Peilrichtung versetzbar ist.

11. Sonarsystem nach einem der vorhergehenden Ansprüche, beinhaltend einen Träger (2), wobei die Sendeantenne (6) auf dem Träger (2) installiert ist.

12. Sonarsystem nach einem der vorhergehenden Ansprüche, wobei die Sendeantenne (6) so angeordnet ist, dass ihre Sendefläche (6) sich in Längsrichtung entlang einer Achse parallel zur Bewegungsrichtung des Trägers (2) erstreckt.

13. Sonarsystem nach dem vorhergehenden Anspruch, beinhaltend zwei an Backbord und an Steuerbord des Trägers befestigte Sendeantennen.

14. Sonarsystem nach einem der vorhergehenden Ansprüche, wobei die erste Richtung (d1) die Richtung der maximalen Reichweite des Sonarsystems ist und die zweite Richtung (d2) die Richtung der minimalen Reichweite des Sonarsystems ist.

**Claims**

1. A sonar system intended to image the seabed, comprising at least one emission antenna (10) intended to emit an acoustic beam directed toward the seabed covering a useful angular sector (4) starting from the antenna and delimited by a first direction (d1) and a second direction (d2) which are inclined with respect to the horizontal and the vertical, the first direction (d1) forming an angle with the horizontal (01) presenting an absolute value which is less than an absolute value of a second angle ($\theta 2$) formed between the second direction and the horizontal, the absolute value of the first angle and the absolute value of the second angle being less than $\pi/2$,
   the emission antenna (10) being configured so as to form an emission pattern exhibiting an emitted energy absolute maximum of energy emitted substantially in the first direction (d1) and having an emitted energy which decreases from the first direction (d1) to the second direction (d2),
   **characterized in that** a portion of the useful angular sector is defined delimited by the second direction (d2) and a third direction (d3) comprised between the first direction (d1) and the second direction (d2), **in that** an ideal emission pattern is defined having, in any direction of said portion, forming an angle 0 with the horizontal,
   an ideal attenuation DE ($\theta$) given by the following equation:

$$DE(\theta) = -40 \log \left( \frac{\sin \theta_1}{\sin \theta} \right),$$

   and **in that** the transmitting antenna is configured so that for each direction (d), forming an angle $\theta$ with the horizontal, included in said portion of the useful angular sector, the transmission pattern has, in said direction an energy attenuation relative to the energy emitted in the first direction (d1) at least equal to the ideal attenuation DE ($\theta$) and greater than said ideal attenuation by at most 15 dB, the ideal attenuation DE ($\theta$) being at least equal to 3dB, the emission pattern having, in said third direction (d3), an energy attenuation, with respect to the energy emitted in the first direction (d1), substantially equal to 3dB.

2. The sonar system as claimed in the preceding claim, in which the third direction is a direction for which the attenuation is substantially equal to 3dB, the angle formed between the third direction and the first direction being less than 3 degrees.

3. The sonar system as claimed in any one of the preceding claims, in which the emission antenna (10) comprises an emitting surface (6) whose profile, in a plane perpendicular to the plane formed by the first direction d1 and the second direction d2 , is a curve whose radius of curvature varies according to the curvilinear abscissa on this curve, so as to form said emission pattern.

4. The sonar system as claimed in the preceding claim, in which the emitting surface is a curved surface (6).

5. The sonar system as claimed in any one of claims 3 to 4, in which the radius of curvature of the emitting surface increases with the distance separating the point considered of the emitting surface from the ideal seabed in a direction perpendicular to the ideal seabed.

6. The sonar system as claimed in any one of claims 3 to 5, in which the curve formed by the emitting surface (6) in a sectional plane of the antenna perpendicular to its longitudinal axis is formed by a single transducer.

7. A sonar system as claimed in any preceding claim, wherein the antenna has a uniform profile along the entire length of the antenna.

8. The sonar system as claimed in any one of claims 1 to 2, in which the antenna (110) comprises an emitting surface (160) forming a curve in a sectional plane of the antenna perpendicular to its longitudinal axis, said curve being formed by a plurality of transducers (180), said antenna comprising a power feed device (90) feeding the respective transducers with one and the same signal affected by respective phase shifts and/or amplitude modulation so as to form said emission pattern.

9. The sonar system as claimed in the preceding claim, in which the emitting surface (160) is plane or cylindrical.

10. The sonar system as claimed in any one of the preceding claims, in which the pointing of said emission antenna can be offset in terms of bearing.

11. The sonar system as claimed in any one of the preceding claims, comprising a carrier (2), the emission antenna (6) being installed on the carrier (2).

12. The sonar system as claimed in any one of the preceding claims, in which the emission antenna (6) is arranged in such a way that its emitting surface (6) extends longitudinally along an axis parallel to the direction of displacement of the carrier (2).

13. The sonar system as claimed in the preceding claim comprising two emission antennas fixed to port and to starboard of the carrier.

14. The sonar system as claimed in any one of the preceding claims, in which the first direction (d1) is the direction of maximum range of the sonar system and the second direction (d2) is the direction of minimum range of the sonar system.

FIG.1

FIG.2

FIG.3

FIG.4

FIG.5

FIG.6

FIG.7

FIG.8